# EUROPEAN PATENT APPLICATION

(11) **EP 4 746 235 A1**
(43) Date of publication of application: **20.05.2026**
(21) Application number: 25215631.0
(22) Date of filing: 13.11.2025
(51) Int. Cl.: H02J 3/38, H02J 3/48, G06Q 50/06

(54) **DEVELOPING POWER GRID USING A COMPUTER-IMPLEMENTED METHOD**

(30) Priority: 13.11.2024 NL 2039067
(71) Applicant: Alliander N.V., 6812 AH Arnhem (NL)
(72) Inventor: MIEDEMA-BAKOS, Evelin, 6812 AH ARNHEM (NL); DUKOVSKA, Irena, 6812 AH ARNHEM (NL)
(74) Representative: Arnold & Siedsma

(57) **Abstract**

The computer-implemented method involves developing a power grid. Initially, a first base load that represents the minimum amount of electrical power needed by one or more power consumers or generators is input. Next, at least one measurement is obtained to represent a portion of the present power grid's load during a predetermined time period. The measurement is allocated to one or more power grid components and mapped to topology points in the power grid. Additionally, at least one parameter representing expected load, voltage, or power during a future time period is inputted, and added to the first base load to obtain an expected second base load. A first estimation is performed based on the expected second base load, and a developing plan is determined for the power grid. The plan involves apportioning electric power to different power consumers and generators during the future time period based on the first estimation.

## Description

### Field of Invention

The present invention relates to the field of electrical power grids, and more particularly to techniques for developing and managing power grids using computer-implemented methods.

### Background

Power grid design is a complex and challenging task that requires expertise in various fields, including electrical engineering, computer science, and mathematics. Traditional methods of power grid development rely heavily on manual processes that are time-consuming, error-prone, and costly. These methods are also limited in their ability to account for the dynamic and unpredictable nature of power demand and supply.

In recent years, there have been attempts to develop computer-based tools for power grid design and management. These tools typically use mathematical models and algorithms to simulate the behavior of the power grid under different conditions and to optimize its performance. However, these tools are often limited in their ability to accurately predict future power demand and supply, and they may not take into account all the relevant factors that affect power grid operation.

The disadvantages of the current state of the art are numerous. First, the traditional methods of power grid development are slow and inefficient, requiring significant resources and time. Second, these methods are prone to errors, which can have serious consequences for the safety and reliability of the power grid. Third, they are not well-suited to the dynamic and unpredictable nature of power demand and supply, which can lead to suboptimal performance and inefficiencies.

### Summary

It is therefore an objective of the present invention to provide a computer-implemented method for developing and managing power grids that overcomes the limitations of traditional methods and allows for more accurate and efficient power grid design and management.

According to a first aspect, there is provided a computer-implemented method for determining a developing plan for a power grid. A power grid is a network of electrical components that are used to distribute and manage electrical power. The method comprises
- inputting a first base load representative for at least a minimum amount of electrical power needed by or provided by one or more different power consumers or generators;
- inputting at least one measurement representative for at least a portion of a load of the present power grid during a predetermined first time period;
- allocating the at least one measurement to one or more power grid components in the power grid;
- map the allocated at least one grid measurement to one or more topology points in the power grid;
- inputting at least one parameter representative for at least one of an expected load, an expected voltage, and an expected power of the power grid during a predetermined second time period, wherein the second time period is a future time period with respect to the first time period;
- adding the at least one parameter to the first base load to obtain an expected second base load representative for at least a minimum expected amount of electrical power needed for the power grid during the predetermined second time period;
- performing a first estimation based on the expected second base load; and
- determining the developing plan for the power grid, wherein the determining of the developing plan comprises steps for:
   - apportioning electric power to different power consumers and generators during the predetermined second time period based on the first estimation;
   - identifying one or more power components which, based on the first estimation, do not meet the expected second base load; and/or
   - determining one or more new recovery routes for the expected second base load.

The method begins by establishing a topology-aware model of the grid's present state. This is achieved by inputting a first base load representative for at least a minimum amount of electrical power, and inputting at least one measurement representative for a portion of the grid's load during a predetermined first time period. The method then comprises allocating this measurement to specific power grid components and mapping the allocated measurement to one or more topology points. This process creates a data-driven representation of the grid's current physical state.

To simulate a future scenario, the method comprises inputting at least one parameter representative for an expected load, voltage, or power during a future second time period. This future parameter is added to the first base load to obtain an expected second base load for the grid during that future period.

A first estimation is then performed based on this expected second base load to predict a future state of the power grid.

Finally, based on this estimation, a developing plan for the power grid is determined. This plan comprises concrete, actionable steps for future grid development, including at least one of:
apportioning electric power to different power consumers and generators;
identifying one or more power components which, based on the estimation, will not meet the expected future load; and/or
determining one or more new recovery routes for the expected future load, such as planning for new transformers or transmission lines.

One advantage of this method is that it provides a more accurate and realistic basis for long-term grid planning. By building a future estimation upon a detailed, topology-aware model of the grid's actual current state, the invention allows for more precise predictions of future power requirements compared to prior art methods that rely on high-level, abstract models.

Another advantage is that the method enables proactive and strategic infrastructure planning. By identifying specific power components that are likely to fail or become overloaded in the future, and by determining new recovery routes, the developing plan allows power grid operators to address potential bottlenecks before they occur. This leads to more effective, costefficient expansion of the power grid and results in a more stable and reliable power grid in the long term. This forward-looking, simulation-based planning approach is fundamentally different from prior art real-time operational control systems, which are reactive by nature.

Preferably, the computer-implemented method comprises apportioning the electric power based on parameter time curves representative for the electric consumption or production of the one or more different power consumers or generators. Parameter time curves are graphs that show how the electric consumption or production of power consumers or generators changes over time. It may be provided that the use of parameter time curves allows for more precise and efficient allocation of electric power to different power consumers and generators. By taking into account the dynamic and changing nature of power demand and supply, the method can determine the most efficient and effective way to allocate electric power in real-time. This can lead to better management of power resources and a more stable and reliable power grid. Furthermore, this method enables more accurate predictions of future power requirements. By analyzing the parameter time curves, the method can predict future changes in power demand and supply with greater accuracy. This can allow for more effective planning for the development and expansion of the power grid, leading to better performance and efficiency. Another advantage of this is that it enables more accurate predictions of future power requirements.

Preferably, the computer-implemented method comprises limiting the maximum consumable electric power for at least one individual consumer and/or generator. The maximum consumable electric power is the maximum amount of electric power that a consumer or generator is allowed to consume or produce. It may be provided that limiting the maximum consumable electric power for individual consumers and/or generators allows for more efficient use of power resources and can help to prevent overloading of the power grid. By limiting the maximum consumable electric power, the method can ensure that each consumer or generator only uses the amount of power that is necessary, preventing waste and reducing the risk of power shortages or blackouts. Furthermore, this method can help to improve the stability and reliability of the power grid. By limiting the maximum consumable electric power, the method can prevent individual consumers or generators from overloading the power grid, which can lead to instability and even failure of the power grid. This can help to ensure that the power grid operates safely and reliably at all times. Another advantage of this method is that it enables more effective management of power resources. By limiting the maximum consumable electric power, the method can ensure that power resources are used in the most efficient way possible, reducing waste and increasing the overall efficiency of the power grid. Additionally, this method allows for better control of power consumption and generation. By limiting the maximum consumable electric power, the method can allow for more precise control of power consumption and generation, ensuring that the power grid operates in a stable and efficient manner at all times.

Preferably, the computer-implemented method comprises compiling a consumer and/or generator profile using the at least one parameter. The consumer and/or generator profile comprises the consumers and/or generators requested or expected load capacity over a predetermined range of time. **In** the step of determining the developing plan, the developing plan further comprises matching the consumer and/or generator profile to the first estimation, and apportioning the electric power such that the grid state corresponds with the consumer and/or generator profile. It may be provided that compiling a consumer and/or generator profile allows for more precise and efficient management of power resources. By analyzing the expected load capacity of individual consumers and/or generators over a predetermined range of time, the method can determine the most efficient and effective way to allocate electric power in real-time. This can lead to better management of power resources and a more stable and reliable power grid. Furthermore, this method can help to improve the stability and reliability of the power grid. By matching the consumer and/or generator profile to the first estimation, the method can ensure that the power grid operates in a stable and efficient manner at all times. This can help to prevent overloading of the power grid and reduce the risk of power shortages or blackouts. Another advantage of this method is that it enables more effective planning for the development and expansion of the power grid. By analyzing the consumer and/or generator profile, power grid operators and developers can plan more effectively for future expansion and development of the power grid, leading to better performance and efficiency. Additionally, this method allows for more efficient use of processing power and storage capacity. By compiling the consumer and/or generator profile and matching it to the first estimation, the method can optimize the use of processing power and storage capacity, ensuring that these resources are used in the most efficient way possible. This can lead to cost savings and better overall performance of the power grid.

Preferably, the computer-implemented method comprises compiling a consumer and/or generator profile using the at least one parameter. The consumer and/or generator profile comprises the consumers and/or generators requested or expected load capacity over a predetermined range of time. **In** the step of determining the developing plan, the developing plan further comprises matching the consumer and/or generator profile to the first estimation, and apportioning the electric power such that the grid state corresponds with the consumer and/or generator profile. It may be provided that compiling a consumer and/or generator profile allows for more precise and efficient management of power resources. By analyzing the expected load capacity of individual consumers and/or generators over a predetermined range of time, the method can determine the most efficient and effective way to allocate electric power in real-time. This can lead to better management of power resources and a more stable and reliable power grid. Furthermore, this arrangement can help to improve the stability and reliability of the power grid. By matching the consumer and/or generator profile to the first estimation, the method can ensure that the power grid operates in a stable and efficient manner at all times. This can help to prevent overloading of the power grid and reduce the risk of power shortages or blackouts. Another advantage of this arrangement is that it enables more effective planning for the development and expansion of the power grid. By analyzing the consumer and/or generator profile, power grid operators and developers can plan more effectively for future expansion and development of the power grid, leading to better performance and efficiency. Additionally, this arrangement allows for more efficient use of processing power and storage capacity. By compiling the consumer and/or generator profile and matching it to the first estimation, the method can optimize the use of processing power and storage capacity, ensuring that these resources are used in the most efficient way possible. This can lead to cost savings and better overall performance of the power grid. Preferably, the computer-implemented method comprises mapping the consumer and/or generator profile to one or more topology points in the grid. Topology points are specific points in the power grid where measurements can be taken and used to estimate the state of the power grid. It may be provided that mapping the consumer and/or generator profile to topology points in the grid allows for more accurate and efficient management of power resources. By mapping the consumer and/or generator profile to specific points in the power grid, the method can determine the most efficient and effective way to allocate electric power in real-time. This can lead to better management of power resources and a more stable and reliable power grid. Furthermore, this arrangement can help to improve the stability and reliability of the power grid. By mapping the consumer and/or generator profile to topology points in the grid, the method can ensure that the power grid operates in a stable and efficient manner at all times. This can help to prevent overloading of the power grid and reduce the risk of power shortages or blackouts. Another advantage of this arrangement is that it enables more effective planning for the development and expansion of the power grid. By mapping the consumer and/or generator profile to topology points in the grid, power grid operators and developers can plan more effectively for future expansion and development of the power grid, leading to better performance and efficiency. Additionally, this arrangement allows for more efficient use of processing power and storage capacity. By mapping the consumer and/or generator profile to topology points in the grid, the method can optimize the use of processing power and storage capacity, ensuring that these resources are used in the most efficient way possible. This can lead to cost savings and better overall performance of the power grid. More preferably, the computer-implemented method comprises determining where new consumers and/or generators are integratable in the grid based on the mapping and the first estimation. This involves analyzing the consumer and/or generator profile and the first estimation to identify specific points in the power grid where new consumers and/or generators can be integrated in the most efficient and effective way possible. It may be provided that determining where new consumers and/or generators are integratable in the grid allows for more effective planning for the development and expansion of the power grid. By analyzing the mapping and the first estimation, power grid operators and developers can identify the most efficient and effective way to integrate new consumers and/or generators into the power grid. This can lead to better performance and efficiency of the power grid. Furthermore, this arrangement can help to improve the stability and reliability of the power grid. By identifying the most efficient and effective way to integrate new consumers and/or generators, the method can ensure that the power grid operates in a stable and efficient manner, reducing the risk of overloading and power shortages or blackouts. Another advantage of this arrangement is that it enables more efficient use of processing power and storage capacity. By analyzing the mapping and the first estimation, the method can optimize the use of processing power and storage capacity, ensuring that these resources are used in the most efficient way possible. This can lead to cost savings and better overall performance of the power grid.

Preferably, the computer-implemented method comprises a consumer and/or generator profile that further comprises at least one growth parameter representative for an expected load growth of the consumer and/or generator. The growth parameter is a measure of the expected increase in power demand or supply for a specific consumer or generator over a certain period of time. It may be provided that including growth parameters in the consumer and/or generator profile allows for more effective planning for the development and expansion of the power grid. By analyzing the growth parameters, power grid operators and developers can identify the most efficient and effective way to expand the power grid to meet the expected increase in power demand or supply. This can lead to better performance and efficiency of the power grid. Furthermore, this arrangement can help to improve the stability and reliability of the power grid. By taking into account the expected increase in power demand or supply for individual consumers and/or generators, the method can ensure that the power grid is expanded in a way that is stable and efficient, reducing the risk of overloading and power shortages or blackouts. Another advantage of this arrangement is that it enables more efficient use of processing power and storage capacity. By analyzing the growth parameters, the method can optimize the use of processing power and storage capacity, ensuring that these resources are used in the most efficient way possible. This can lead to cost savings and better overall performance of the power grid.

Preferably, the step of determining one or more new recovery routes in the developing plan comprises generating instructions for tangible infrastructure changes to the power grid. For example, if the first estimation predicts a future bottleneck at a specific substation, the developing plan may include instructions for actions such as adding a new transformer or generator at that location, or connecting the substation to a different transmission line to provide redundancy and increase capacity. This feature provides a technical advantage by translating a predictive simulation into a concrete, actionable engineering plan. The output is not merely an abstract recommendation, but a set of specific instructions for physical grid expansion. This allows grid operators and developers to move directly from planning to implementation, making the process of grid development more efficient and targeted. Unlike real-time operational systems (such as in US20190235554) which manage power flow within the existing grid infrastructure, this feature plans for the creation of new physical assets and the modification of the grid's physical topology. It addresses long-term strategic development rather than short-term operational management. It also provides a more granular and practical solution than high-level economic models (as in "Multiobjective techno-economic generation expansion planning to increase the penetration of distributed generation resources based on demand response algorithms" by Davoodi et al.), by proposing specific hardware solutions for specific, identified future weak points in the grid's topology. This ensures that capital investments are directed precisely where they are needed, enhancing the long-term stability and reliability of the power grid in a cost-effective manner.

Preferably, the step of identifying one or more power components is defined as a quantitative diagnostic process. This process comprises two actions: first, comparing a predicted performance parameter of a specific power component, derived from the first estimation of the future grid state, against a required performance threshold, derived from the expected second base load. Second, if the predicted performance fails to meet this threshold, the method identifies that specific component as being unable to meet the future load. This feature provides the advantage of transforming a general forecast into a specific, actionable engineering diagnosis. Instead of merely predicting a general power shortfall in a region, the invention pinpoints the exact componentssuch as a specific transformer or transmission line-that are the root cause of the predicted failure. This enables a highly targeted and efficient approach to grid development, as resources can be directed precisely where they are needed to prevent future bottlenecks.

Preferably, the identifying step is functionally linked to the generation of specific, concrete instructions for the developing plan. In this exemplary embodiment, after a power component is identified as being unable to meet the expected future load for example, the method proceeds to generate a plan with instructions for specific engineering actions to remedy the predicted deficiency. These instructions include, for example, increasing the capacity of the identified power component (such as by adding a new transformer or generator) or rerouting one or more power transmission lines to bypass the identified bottleneck.

The technical advantage of this feature is that it transforms the method from a simple diagnostic tool into a complete, end-to-end prescriptive planning engine. The step does not merely flag a future problem; it automatically proposes a tangible, physical solution. This closes the loop between prediction and action, allowing grid developers to directly obtain an engineering-level plan for infrastructure upgrades based on the simulation results. This makes the entire grid development process significantly more efficient, targeted, and cost-effective, as capital is invested directly in solving specific, predicted points of failure.

Preferably, the computer-implemented method comprises obtaining at least one measurement representative for at least a portion of a load of the present power grid during a predetermined first time period, wherein the at least one grid measurement comprises at least a parameter time curve representative for the consumption of electric power by an individual consumer. A parameter time curve may be understood as a graph that shows how the electric consumption or production of power consumers or generators changes over time. It may be provided that including a parameter time curve representative for the consumption of electric power by an individual consumer in the at least one grid measurement allows for more precise and efficient allocation of electric power to different power consumers and generators. By taking into account the dynamic and changing nature of power demand and supply for each individual consumer, the method can determine the most efficient and effective way to allocate electric power in real-time. This can lead to better management of power resources and a more stable and reliable power grid. Furthermore, this method enables more accurate predictions of future power requirements for each individual consumer. By analyzing the parameter time curves, the method can predict future changes in power demand and supply for each individual consumer with greater accuracy. This can allow for more effective planning for the development and expansion of the power grid, leading to better performance and efficiency for each individual consumer. Another advantage of this method is that it enables more efficient use of processing power and storage capacity for each individual consumer. By using parameter time curves to allocate electric power for each individual consumer, the method can optimize the use of processing power and storage capacity, ensuring that these resources are used in the most efficient way possible for each individual consumer. This can lead to cost savings and better overall performance of the power grid for each individual consumer. The inclusion of a parameter time curve representative for the consumption of electric power by an individual consumer in the at least one grid measurement provides a more accurate and efficient method for developing and managing power grids. The method is able to account for the dynamic and unpredictable nature of power demand and supply for each individual consumer, allowing for more accurate predictions of future power requirements for each individual consumer.

Preferably, the computer-implemented method comprises measuring at least a portion of the load at a single connection point in the power grid in the step of obtaining at least one measurement. A connection point is a specific point in the power grid where power can be transmitted or received. It may be provided that measuring at least a portion of the load at a single connection point in the power grid allows for more efficient and cost-effective monitoring of the power grid. By measuring at a single connection point, the method can obtain a representative measurement of the overall power consumption or generation at that point in the power grid, reducing the need for multiple measurements throughout the power grid. This can lead to cost savings and better use of resources. Additionally, this method enables more effective monitoring of the power grid. By measuring at a single connection point, the method can obtain a more accurate and timely representation of the overall state of the power grid at that point, allowing for more effective management of power resources and a more stable and reliable power grid.

Preferably, the computer-implemented method comprises identifying one or more power components which, based on the first estimation, do not meet the expected second base load in the step of determining the developing plan. Power components may be understood as individual elements of the power grid, such as transformers, generators, and transmission lines. It may be provided that identifying one or more power components which do not meet the expected second base load allows for more effective management of the power grid. By identifying these components, the method can determine the most efficient and effective way to allocate electric power to ensure that the expected second base load is met. This can lead to better management of power resources and a more stable and reliable power grid. Additionally, this method enables more effective planning for the development of power grids. By identifying power components that do not meet the expected second base load, power grid operators and developers can plan more effectively for future expansion and development of the power grid, leading to better performance and efficiency.

Preferably, the computer-implemented method according to any one of the previous claims comprises determining one or more new recovery routes for the expected second base load in the step of determining the developing plan. A recovery route may be understood as an alternative pathway for the transmission of electric power in the power grid. It may be provided that determining one or more new recovery routes for the expected second base load allows for more effective management of the power grid. By determining these routes, the method can ensure that electric power is transmitted efficiently and effectively to meet the expected second base load, even if the primary routes are not available. This can lead to better management of power resources and a more stable and reliable power grid. Additionally, this method enables more effective planning for the development of power grids. By determining new recovery routes, power grid operators and developers can plan more effectively for future expansion and development of the power grid, leading to better performance and efficiency.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the computer program product.

According to another aspect, there is provided a computer-implemented method for developing a power grid. A power grid is a network of electrical components that are used to distribute and manage electrical power. The method comprises inputting a first base load representative for at least a minimum amount of electrical power needed by or provided by one or more different power consumers or generators. A base load is the minimum amount of electrical power that is needed to meet the current demand of a power grid. The method further comprises obtaining at least one measurement representative for at least a portion of a load of the present power grid during a predetermined first time period. The measurement may be representative of the actual power consumption or generation at a specific point in the power grid.

At least one measurement is allocated to one or more power grid components in the power grid. The method further comprises mapping the allocated at least one grid measurement to one or more topology points in the power grid. Topology points are specific points in the power grid where measurements can be taken and used to estimate the state of the power grid. It is also provided that at least one parameter representative for at least one of an expected load, an expected voltage, and an expected power of the power grid during a predetermined second time period is inputted. The second time period is a future time period with respect to the first time period. The method further comprises adding the at least one parameter to the first base load to obtain an expected second base load representative for at least a minimum expected amount of electrical power needed for the power grid during the predetermined second time period. It is further provided that a first estimation is performed based on the expected second base load. The estimation may be used to predict the future state of the power grid and to optimize its performance. Finally, a developing plan for the power grid is determined, wherein in the developing plan at least electric power is apportioned to different power consumers and generators during the predetermined second time period based on the first estimation. One advantage of the method is that it provides a more accurate and efficient method for developing and managing power grids. The method is able to account for the dynamic and unpredictable nature of power demand and supply, allowing for more accurate predictions of future power requirements. This can lead to improved performance and efficiency of the power grid. Additionally, the method is easy to use and cost-effective, making it accessible to a wide range of power grid operators and developers. Another advantage of the method is that it allows for more precise allocation of electric power to different power consumers and generators. By using the first estimation, the method can determine the most efficient and effective way to allocate electric power based on the current and predicted state of the power grid. This can lead to better management of power resources and a more stable and reliable power grid. Furthermore, the method enables more effective planning for the development of power grids. By using the method to predict future power requirements and to optimize the performance of the power grid, power grid operators and developers can plan more effectively for future expansion and development of the power grid.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the digital storage medium.

According to yet another aspect of the present invention, there is provided a device programmed to perform a method comprising the steps of any one of the methods of the method embodiments described above.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

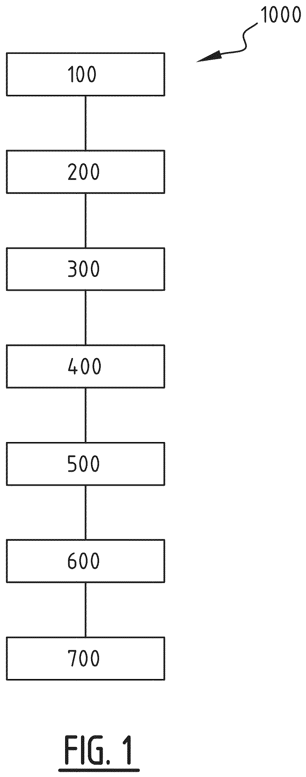

Figure 1 schematically illustrates a flowchart of an exemplary embodiment of a computer-implemented method for developing a power grid.

### Description of embodiments

Figure 1 schematically illustrates a flowchart of an embodiment of a computer-implemented method 1000 for developing a power grid. A power grid is a network of electrical components that are used to distribute and manage electrical power. The components may include generators, transformers, transmission lines, distribution lines, and other equipment that work together to ensure the reliable delivery of electricity to consumers. The power grid may cover a small geographic area, such as a neighborhood or a city, or it may cover a large region, such as a state or a country.

The method comprises inputting 100 a first base load representative for at least a minimum amount of electrical power needed by or provided by one or more different power consumers or generators. A base load is the amount of electrical power that is needed to meet the demand of a power grid. Inputting 100 at least one parameter representative for at least one of an expected load, an expected voltage, and an expected power during a predetermined second time period may involve entering numerical values for these parameters. For example, the expected load may be 1200 MW, the expected voltage may be 220 kV, and the expected power may be 1500 MVA.

Next, at least one measurement representative for at least a portion of a load of the present power grid during a predetermined first time period is obtained 200. The measurement may be representative of the actual power consumption or generation at a specific point in the power grid. An example of obtaining at least one measurement representative for at least a portion of a load of the present power grid during a predetermined first time period may involve installing one or more sensors at specific points in the power grid to measure the actual power consumption or generation at those points. For example, a sensor may be installed at a substation to measure the amount of power being transmitted to a particular area or neighborhood. The sensor may send the measurement data to a central control system, which aggregates the data from all the sensors to get an overall picture of the state of the power grid. Based on this data, the control system can determine the current load on the power grid and make adjustments to ensure that the power supply is sufficient to meet the demand.

Next, the at least one measurement is allocated 300 to one or more power grid components in the power grid, and the allocated measurement is mapped 400 to one or more topology points in the power grid. A topology point is a specific point in the power grid where measurements can be taken and used to estimate the state of the power grid. Allocating a measurement to one or more power grid components means assigning the measurement to a specific component in the power grid, such as a transformer or a substation. This allows the control system to track the flow of power through the grid and estimate the current state of the grid based on the measurements taken at each component. Mapping the measurement to one or more topology points involves associating the measurement with a specific point in the power grid where it was taken, such as a particular substation or transmission line. This allows the control system to identify the location of the measurement and track it over time as it moves through the grid. For example, a measurement may be taken at a substation and allocated to the transformer that supplies power to a specific neighborhood. The measurement may be mapped to a topology point that represents the location of the substation on the power grid. This allows the control system to monitor the flow of power through the grid and estimate the current state of the grid based on the measurements taken at each topology point. In another example, a measurement may be taken at a point on a transmission line and allocated to the line itself. The measurement may be mapped to topology points at either end of the line, as well as any intermediate points where measurements are taken. This allows the control system to monitor the flow of power through the line and identify any areas where there may be congestion or other issues that could affect the stability of the grid.

After obtaining at least one measurement representative for at least a portion of a load of the present power grid during a predetermined first time period, the method involves inputting 500 at least one parameter representative for at least one of an expected load, an expected voltage, and an expected power of the power grid during a predetermined second time period. The second time period is a future time period with respect to the first time period. For example, the expected load may be the amount of electrical power that is expected to be consumed or generated by the power grid during the predetermined second time period, which could be a few hours, a day, or even a week or more in the future. The expected voltage and expected power may be other parameters that are used to estimate the state of the power grid during the second time period. The at least one parameter is added to the first base load, which is representative of at least a minimum amount of electrical power needed for the power grid during the first time period, to obtain an expected second base load representative for at least a minimum expected amount of electrical power needed for the power grid during the predetermined second time period. This allows the control system to plan ahead for the future power requirements of the grid and ensure that there is enough power available to meet the expected demand. For example, if the first base load is 1000 MW and the expected load during the second time period is 1200 MW, the expected second base load would be 2200 MW (1000 MW + 1200 MW). This means that the power grid must be able to generate or obtain at least 2200 MW of electrical power during the predetermined second time period to meet the expected demand.

After obtaining the expected second base load, a first estimation is performed 600 based on this load. This estimation is used to predict the future state of the power grid and to optimize its performance. The estimation takes into account the expected load, expected voltage, and expected power of the power grid during the predetermined second time period, as well as the current state of the power grid based on the measurements taken during the first time period.

The first estimation may use various algorithms and techniques to analyze the data and predict the future state of the power grid. For example, machine learning algorithms may be used to identify patterns and trends in the data and make predictions based on those patterns.

Based on the estimation, a developing plan for the power grid is determined 700. This plan involves apportioning electric power to different power consumers and generators during the predetermined second time period based on the first estimation. The plan may involve adjusting the output of power generators, rerouting power transmission lines, or taking other actions to ensure that the power supply is sufficient to meet the expected demand. For example, if the estimation predicts that there will be a high demand for power in a certain area during the second time period, the plan may involve increasing the output of power generators in that area or rerouting power transmission lines to ensure that enough power is available. Alternatively, if the estimation predicts that there will be excess power in a certain area, the plan may involve reducing the output of power generators or diverting the excess power to another area where it is needed. Moreover, if the estimation predicts a potential overload in an area during the second time period, the plan may involve implementing demand response measures. This could include temporarily limiting the power consumption of certain non-essential customers or industries. For instance, large industrial facilities might be asked to reduce their power usage during peak times, or residential customers could be incentivized to lower their consumption through time-of-use pricing. This helps prevent grid overload and ensures that services remain uninterrupted.

One advantage of the method 1000 is that it provides a more accurate and efficient method for developing and managing power grids. The method is able to account for the dynamic and unpredictable nature of power demand and supply, allowing for more accurate predictions of future power requirements. This can lead to improved performance and efficiency of the power grid. Additionally, the method allows for more precise allocation of electric power to different power consumers and generators. By using the first estimation, the method can determine the most efficient and effective way to allocate electric power based on the current and predicted state of the power grid. This can lead to better management of power resources and a more stable and reliable power grid. Furthermore, the method enables more effective planning for the development of power grids. By using the method to predict future power requirements and to optimize the performance of the power grid, power grid operators and developers can plan more effectively for future expansion and development of the power grid. This arrangement provides technical advantages related to better use of processing power and storage capacity, and improved bandwidth usage.

Preferably, the step of apportioning 400 the electric power is performed based on parameter time curves representative for the electric consumption or production of the one or more different power consumers or generators. Parameter time curves are graphs that show how the electric consumption or production of power consumers or generators changes over time. The use of parameter time curves in the computer-implemented method involves analyzing how the electric consumption or production of power consumers or generators changes over time and using this information to allocate electric power more precisely and efficiently. For example, a parameter time curve may show how the electric consumption of a certain neighborhood changes over the course of a day, with higher demand during peak hours and lower demand during off-peak hours. By analyzing this curve, the control system can allocate more power to the neighborhood during peak hours to ensure that there is enough power available to meet the demand, and less power during off-peak hours to reduce waste and conserve resources. In another example, similarly, a parameter time curve may show how the electric production of a wind farm changes over time based on wind speed and other factors. By analyzing this curve, the control system can allocate more power to the grid during times when the wind farm is producing more power and less power during times when it is producing less power. The use of parameter time curves allows for more precise and efficient allocation of electric power to different power consumers and generators. By taking into account the dynamic and changing nature of power demand and supply, the method can determine the most efficient and effective way to allocate electric power in real-time. This can lead to better management of power resources and a more stable and reliable power grid. By analyzing the parameter time curves, the method can predict future changes in power demand and supply with greater accuracy. This can allow for more effective planning for the development and expansion of the power grid, leading to better performance and efficiency.

The apportioning 400 of electric power in the computer-implemented method may involve limiting the maximum consumable electric power for at least one individual consumer and/or generator. This means that the amount of power that a particular consumer or generator can consume or produce is limited to a certain amount, which can help to prevent overloading of the power grid and ensure that there is enough power available for other consumers and generators. For example, if a particular household has a maximum consumable electric power of 10 kW, the control system can limit the amount of power that the household can consume to 10 kW or less at any given time. This can help to prevent overloading of the power grid during times of high demand and ensure that other households and businesses have access to enough power. Similarly, if a particular wind farm has a maximum consumable electric power of 50 MW, the control system can limit the amount of power that the wind farm can produce to 50 MW or less at any given time. This can help to prevent overloading of the power grid during times of high production and ensure that the excess power is not wasted or lost.

The computer-implemented method 1000 may further comprise compiling a consumer and/or generator profile using the at least one parameter. The profile comprises the consumers and/or generators requested or expected load capacity over a predetermined range of time. This means that the control system can compile information about the expected power consumption or production of individual consumers or generators over a specific period of time, which can help to optimize the allocation of electric power to meet the expected demand. For example, a consumer profile may show how the power consumption of a particular household or business is expected to vary over the course of a day or week, based on factors such as the time of day, the weather, and other variables. Similarly, a generator profile may show how the power production of a wind farm or solar array is expected to vary over time based on weather patterns and other factors.

**In** the step of determining 700 the developing plan, the developing plan further comprises matching the consumer and/or generator profile to the first estimation, and apportioning the electric power such that the grid state corresponds with the consumer and/or generator profile. This means that the control system can use the consumer and/or generator profile to inform the allocation of electric power, ensuring that the power supply is matched to the expected demand and that the grid state is consistent with the consumer and/or generator profile. For example, if the consumer profile for a particular household shows that the household is expected to consume more power during certain times of the day, the developing plan may involve allocating more power to the household during those times to ensure that the demand is met. Similarly, if the generator profile for a wind farm shows that the farm is expected to produce more power during certain times of the day, the developing plan may involve allocating more power from the wind farm during those times to take advantage of the excess production. It may be the case that the developing plan comprises instructions to control of the wind farm generator, for example. The control system of the wind farm generator can adjust the output or integration of the wind farm's power into the grid based on the generator profile. This ensures that the generated power is efficiently utilized, aligning with demand forecasts and maintaining grid stability.

In addition to compiling a consumer and/or generator profile and using it to inform the allocation of electric power, the method may involve mapping the consumer and/or generator profile to one or more topology points in the power grid. This means that the control system can associate the consumer and/or generator profile with specific points in the power grid where the power is being consumed or generated, allowing for more precise and accurate allocation of electric power. For example, a consumer profile for a particular household may be mapped to the topology point that represents the location of the household on the power grid. This would allow the control system to allocate power more precisely to the household, taking into account the specific power requirements and consumption patterns of the household. Similarly, a generator profile for a wind farm or solar array may be mapped to the topology points where the power is being generated. This would allow the control system to allocate power more precisely from the generator to the power grid, taking into account the specific production patterns and capacity of the generator.

Additionally, in the step of determining the developing plan, the developing plan may further comprise determining where new consumers and/or generators are integratable in the grid based on the mapping and the first estimation. This means that the control system can use the mapping of the consumer and/or generator profile to identify areas of the power grid where there is potential for new consumers or generators to be integrated, and use the first estimation to determine the feasibility and impact of adding new consumers or generators to the grid. For example, if the mapping of the consumer and/or generator profile shows that there is a high demand for power in a particular area of the grid, the developing plan may involve identifying potential new consumers in that area, such as new households or businesses that are expected to move into the area in the future. The first estimation can be used to determine the impact of adding these new consumers to the grid, taking into account factors such as the available power supply, the capacity of the transmission lines, and the potential for congestion or other issues. Similarly, if the mapping of the consumer and/or generator profile shows that there is potential for new generators to be added to the grid, such as a new wind farm or solar array, the developing plan may involve identifying potential locations for these generators based on the mapping and the first estimation. The first estimation can be used to determine the impact of adding these new generators to the grid, taking into account factors such as the available power supply, the capacity of the transmission lines, and the potential for congestion or other issues.

Moreover, the consumer and/or generator profile may further comprise at least one growth parameter representative for an expected load growth of the consumer and/or generator. This means that the control system can anticipate future changes in power consumption or production by taking into account the expected growth of individual consumers or generators over time. For example, a growth parameter in a consumer profile may show that the power consumption of a particular household is expected to increase by a certain amount over the course of a year, based on factors such as the addition of new appliances or the arrival of new residents. Similarly, a growth parameter in a generator profile may show that the power production of a wind farm is expected to increase by a certain amount over the course of a year, based on factors such as the installation of new turbines or the expansion of the existing infrastructure. By incorporating growth parameters into the consumer and/or generator profile, the control system can plan ahead for future changes in power demand and supply, ensuring that the power grid is able to meet the expected demand and that new consumers or generators can be integrated into the grid in a way that is efficient and effective.

The at least one grid measurement may also comprise at least a parameter time curve representative for the consumption of electric power by individual consumers. This means that the control system can obtain data about how power is being consumed by individual households or businesses over time, and use this data to inform the allocation of electric power and the development of the power grid. For example, a parameter time curve may show how the power consumption of a particular household or business changes over the course of a day, with higher demand during peak hours and lower demand during off-peak hours. By analyzing this curve, the control system can allocate more power to the household or business during peak hours to ensure that the demand is met, and less power during off-peak hours to reduce waste and conserve resources. Similarly, parameter time curves may be used to track the power consumption of individual neighborhoods or communities, allowing the control system to allocate power more precisely to those areas and optimize the performance of the power grid.

The step of obtaining 200 at least one measurement in the computer-implemented method involves measuring the actual power consumption or generation at a specific point in the power grid. In this case, the measurement is obtained by measuring at a single connection point in the power grid. This means that a sensor or measuring device is installed at a specific point in the power grid to measure the actual power consumption or generation at that point. For example, a sensor may be installed at a substation to measure the amount of power being transmitted to a particular area or neighborhood. The sensor may send the measurement data to a central control system, which aggregates the data from all the sensors to get an overall picture of the state of the power grid. This allows the method 1000 to determine the current load on the power grid and make adjustments to ensure that the power supply is sufficient to meet the demand. By measuring the load at a single connection point, the control system can get a more detailed and accurate picture of the state of the power grid at that point, allowing for more precise and efficient allocation of electric power.

The step of determining 700 the developing plan in the computer-implemented method may involve identifying areas of the power grid where the power supply may not be sufficient to meet the expected demand. This is done by analyzing the first estimation, which takes into account the expected load, expected voltage, and expected power of the power grid during the predetermined second time period, as well as the current state of the power grid based on the measurements taken during the first time period. If the first estimation shows that certain power components in the power grid are not able to meet the expected second base load, the developing plan may involve taking action to address this issue. This may include increasing the capacity of the power components, such as by adding new transformers or generators, or rerouting power transmission lines to ensure that the power supply is sufficient to meet the expected demand. For example, if the first estimation shows that a particular substation is not able to meet the expected second base load, the developing plan may involve adding new transformers or generators to the substation to increase its capacity. Alternatively, the plan may involve rerouting power transmission lines to bypass the substation and ensure that the power supply is sufficient to meet the expected demand. Identifying power components that do not meet the expected second base load allows the control system to address potential issues before they become a problem, ensuring that the power grid is able to meet the expected demand and operate efficiently and reliably.

The step of determining the developing plan in the computer-implemented method involves analyzing the first state estimation to identify areas of the power grid where the power supply may not be sufficient to meet the expected demand. If the grid state estimation shows that certain power components in the power grid are not able to meet the expected second base load, the developing plan may involve determining new recovery routes for the expected second base load.

New recovery routes refer to alternative paths or methods for delivering power to areas that are not able to meet the expected second base load. This may involve rerouting power transmission lines or adding new generators or transformers to increase capacity in certain areas of the power grid. The goal is to ensure that there are multiple ways of delivering power to areas that are in need, reducing the risk of power outages or other disruptions.

For example, if the grid state estimation shows that a particular substation is not able to meet the expected second base load, the developing plan may involve adding a new transformer to the substation or connecting the substation to a different transmission line to ensure that there is enough power available for the expected demand. Similarly, if the grid state estimation shows that a particular neighborhood or area is expected to experience a high demand for power during a certain time period, the developing plan may involve adding a new generator or increasing the output of an existing generator to ensure that there is enough power available.

In addition, if the grid state estimation shows that there is potential for congestion or other issues in a certain area of the power grid, the developing plan may involve adding new generators or transformers to increase capacity and ensure that the power supply is reliable and stable. If the grid state estimation shows that there is a potential for excess power in a certain area of the power grid, the developing plan may involve diverting the excess power to other areas where it is needed or storing it for future use. This can help to reduce waste and ensure that the power supply is optimized for the expected demand. Furthermore, if the grid state estimation shows that a particular transmission line is not able to deliver enough power to a certain area, the developing plan may involve adding a new transmission line or rerouting power through a different line to ensure that the power supply is sufficient to meet the expected demand. Determining new recovery routes for the expected second base load allows the control system to address potential issues and ensure that the power grid is able to meet the expected demand in a reliable and efficient manner. By having multiple ways of delivering power to different areas of the grid, the system can reduce the risk of power outages or other disruptions, improving the overall performance and stability of the power grid. Determining new recovery routes for the expected second base load allows the control system to address potential issues and ensure that the power grid is able to meet the expected demand in a reliable and efficient manner. By having multiple ways of delivering power to different areas of the grid, the system can reduce the risk of power outages or other disruptions, improving the overall performance and stability of the power grid.

Embodiments of the present invention as described above may be advantageously applied in a context of power grid development and management. In other words, embodiments of the present invention may strive to improve the accuracy, efficiency, and stability of power grids by accounting for the dynamic and unpredictable nature of power demand and supply, and enabling more effective planning and management of power resources.

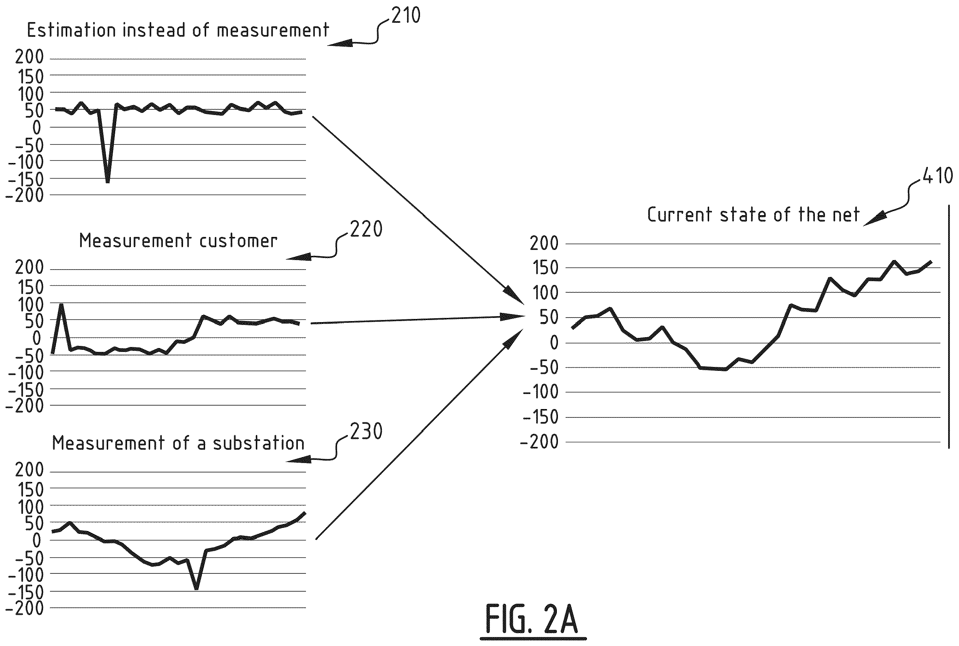

Figure 2A illustrates different examples of the step of inputting 200 at least one measurement representative for at least a portion of a load of the present power grid. The method can utilize various types of data, whether directly measured or estimated, to establish a comprehensive model of the grid's current state.

For instance, the graph titled "Measurement of a substation" 230 provides a specific example where a sensor is installed at a substation to measure the amount of power being transmitted to a particular area or neighborhood. The graph within this graph shows a load profile over time, representing this aggregated power flow, which may serve as a direct input for modeling the current state of the net.

In another example, the graph titled "Measurement customer" 220 illustrates a more granular input. The graph in this graph represents a "parameter time curve representative for the consumption of electric power by an individual consumer." Inputting such a load profile for a single entity on the power grid allows for a more precise model of the grid's current state.

Furthermore, the method is not limited to using only direct measurements. As shown in the graph titled "Estimation instead of measurement," 210 the input data may also comprise an estimated load profile. This is used in cases where direct measurement data is unavailable or impractical to obtain. Such an input allows the method to "estimate the state of the power grid" at specific topology points, ensuring a complete dataset is available for creating the model of the current state of the net.

Collectively, these different types of input data, whether representing an aggregated measurement, an individual measurement, or an estimation, serve as inputs to create the model of the current state of the net, which forms the basis for the subsequent planning and simulation steps.

These inputted measurements are then processed in steps 300 and 400 to construct a detailed and functional model of the grid's present condition. These steps transform raw, unstructured data streams into a structured, topology-aware representation of the power grid, which is required for accurate simulation.

In step 300, the method performs an allocation of the at least one measurement to one or more power grid components. This step involves programmatically associating each inputted data profile with a specific digital representation of a physical asset within the grid model. For example, the load profile from the "Measurement of a substation" 230 graph is not treated as an anonymous set of data points. Instead, it is allocated to, and becomes an attribute of, the specific "Substation S1" component in the system's model. Similarly, the data from the "Measurement customer" 220 graph is allocated to the specific "Customer C1" entity. This allocation step gives each piece of input data a unique identity and context, ensuring that the system understands precisely which component's behavior the data represents.

Following allocation, step 400 performs the mapping of the allocated grid measurement to one or more topology points in the power grid. While allocation gives the data an identity, mapping provides its context and position within the network's structure. This step involves placing the nowidentified components at their correct nodes within the grid's network graph. Continuing the example, after the measurement data has been allocated to "Substation S1," step 400 maps this "Substation S1" component to a specific topology point, for instance, "Node N5" in the grid model. This mapping defines the substation's position relative to other components by establishing its connections to, for example, "Transmission Line L2" and "Distribution Feeder F4." This step is critical because it builds the interconnected network model necessary to calculate power flow and understand how changes in one part of the grid will affect others.

The execution of steps 300 and 400, in combination with the initial input steps, is what produces the detailed model of the "Current state of the net,"410 as depicted by the central red graph in Figure 2A. This model is more than just an aggregation of data; it is a comprehensive, topology-aware digital twin of the physical power grid. This detailed and realistic baseline model is the foundation upon which the subsequent predictive steps of the method are built, enabling a more accurate and reliable estimation of the future grid state and, consequently, a more effective developing plan.

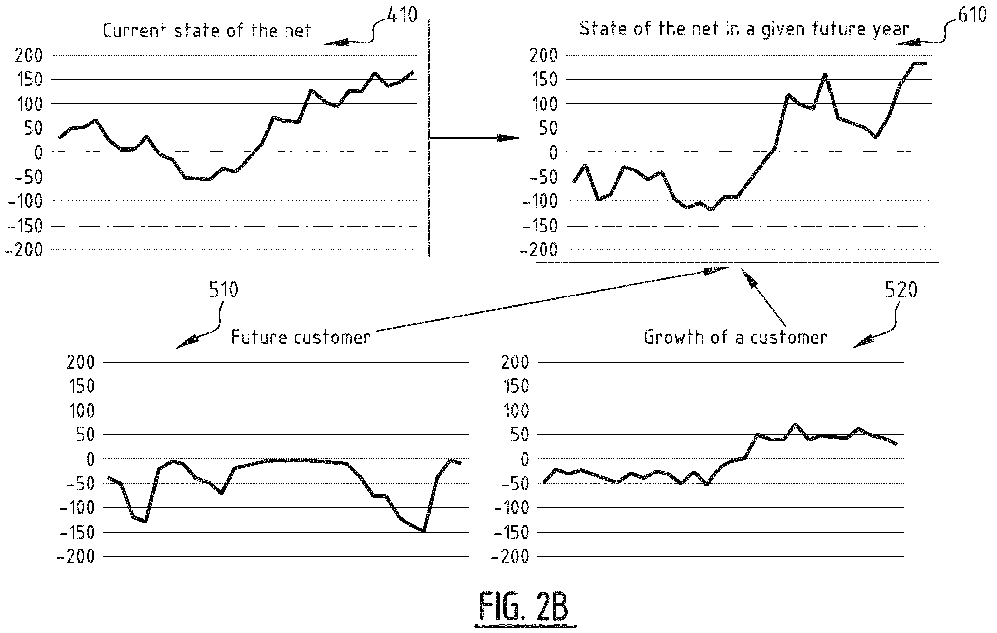

After establishing a detailed model of the grid's current state 410, the method proceeds to simulate a future state by incorporating projections for future changes in load. This process begins with step 500, which comprises inputting at least one parameter representative for at least one of an expected load... during a predetermined second time period. The graphs in Figure 2B provide concrete examples of such parameters.

The graph 510 titled "Future customer" represents the expected load profile of a new consumer, such as a new factory or residential development, that is planned to be connected to the grid in the future.

The graph 520 titled "Growth of a customer" represents an expected increase in the load of an existing consumer over time, for example, due to business expansion or increased electrification.

These future-looking parameters are then used to create a hypothetical future load scenario. The method performs the step of adding the at least one parameter to the first base load to obtain an expected second base load. In practice, this involves computationally superimposing the load profiles from the future scenarios onto the baseline model of the "Current state of the net". The result is a new, aggregated load profile that represents the total expected demand on the grid during the future second time period.

This expected second base load serves as the direct input for step 600, wherein the method performs a first estimation based on the expected second base load. This estimation is a predictive simulation, such as a power flow analysis, run on the grid model using the newly calculated future load. The result of this simulation is the predicted "State of the net in a given future year," as depicted by the graph 610 in Figure 2B. The graph is a new load profile that visually represents the combined effects of the current grid state augmented by the future load additions. This predicted future state reveals how the grid will behave under the strain of the expected future demand, highlighting potential issues such as overloads, voltage drops, or instability.

This predicted future state is not the final output of the method, but rather the data foundation upon which step 700, determining the developing plan for the power grid, is based. The insights gained from this predicted future state-such as which components will be overloaded or where new power routes are needed-are used to generate the concrete, actionable instructions that form the developing plan.

The predicted "State of the net in a given future year" 610 as depicted by the graph 610 in Figure 2B, serves as the input for the final step of the method: step 700, wherein a developing plan for the power grid is determined. This is not an abstract recommendation but a concrete and actionable engineering plan generated by the system, comprising specific instructions for the future development and management of the power grid. The determining of this developing plan comprises performing at least one of the following key actions One of the primary actions within the developing plan is identifying one or more power components which, based on the first estimation, do not meet the expected second base load. This is not a subjective assessment but a quantitative diagnostic process performed by the method. Specifically, the method compares a predicted performance parameter (such as the predicted current flow, thermal load, or voltage level) of an individual power component against a required performance threshold derived from the expected future load. For example, a transformer's predicted MVA load in the future year is compared against its nominal MVA rating.

If the predicted performance parameter fails to meet the required threshold, the method identifies the component as not meeting the load. A practical application of this is identifying a component that is in a predicted overload condition. By performing this step, the method moves beyond a general forecast of a power shortfall and pinpoints the exact future weak spots in the network topology-the specific transformers, transmission lines, or generators that will be unable to cope with the future demand.

Once a component is identified as a potential point of failure, the step of identifying one or more power components is performed for the purpose of generating instructions for the developing plan. This means the diagnostic step is functionally linked to a prescriptive output. The developing plan will contain specific, engineering-level instructions to proactively address the identified future deficiencies. These instructions are part of the broader step of determining one or more new recovery routes for the expected second base load and may comprise at least one of the following tangible actions. Increasing the capacity of the identified power component: For example, if a specific substation transformer was identified as being overloaded in the future, the developing plan will generate instructions for adding a new transformer or generator to that substation. This provides a direct, targeted hardware upgrade to resolve the predicted bottleneck. Rerouting power transmission lines: If a key transmission line is identified as a point of future congestion, the developing plan may generate instructions for rerouting one or more power transmission lines to bypass the identified power component. This could involve creating a plan to build a new line or reconfiguring switching protocols to divert power through underutilized parts of the grid. Creating new connections: As part of determining new recovery routes, the plan may also include instructions for connecting a substation to a different transmission line. This provides redundancy and an alternative power path to enhance the reliability of a specific service area, ensuring it can be supplied even if its primary line is down or overloaded.

This aspect of the developing plan serves as a pre-written engineering work order, detailing the specific physical changes needed to prepare the grid for its future demands.

In addition to planning physical infrastructure changes, the developing plan also comprises the strategic step of apportioning electric power to different power consumers and generators during the predetermined second time period based on the first estimation. This is a planning action, not a real-time dispatch. It involves creating a future-state management strategy to ensure the predicted loads can be met efficiently. For example, if the estimation shows a high-demand period in the future year, the plan may involve pre-allocating generation from specific power plants or specifying future "demand response" measures, such as limiting the maximum consumable power for certain large industrial consumers during predicted peak hours. This allows grid operators to plan for future operational strategies that optimize the use of both existing and planned infrastructure, ensuring long-term grid stability and efficiency.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various methods that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional graphs labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any graph diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. **In** the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. **In** claims enumerating several means, several of these means can be embodied by one and the same item of hardware. The usage of the words "first", "second", "third", etc. does not indicate any ordering or priority. These words are to be interpreted as names used for convenience.

**In** the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A computer-implemented method for determining a developing plan for a power grid, the method comprising:
- inputting a first base load representative for at least a minimum amount of electrical power needed by or provided by one or more different power consumers or generators;
- inputting at least one measurement representative for at least a portion of a load of the present power grid during a predetermined first time period;
- allocating the at least one measurement to one or more power grid components in the power grid;
- map the allocated at least one grid measurement to one or more topology points in the power grid;
- inputting at least one parameter representative for at least one of an expected load, an expected voltage, and an expected power of the power grid during a predetermined second time period, wherein the second time period is a future time period with respect to the first time period;
- adding the at least one parameter to the first base load to obtain an expected second base load representative for at least a minimum expected amount of electrical power needed for the power grid during the predetermined second time period;
- performing a first estimation based on the expected second base load; and
- determining the developing plan for the power grid, wherein the determining of the developing plan comprises steps for:
- apportioning electric power to different power consumers and generators during the predetermined second time period based on the first estimation;
- identifying one or more power components which, based on the first estimation, do not meet the expected second base load; and/or
- determining one or more new recovery routes for the expected second base load.

2. The computer-implemented method of claim 1, wherein the apportioning of the electric power is performed based on parameter time curves representative for the electric consumption or production of the one or more different power consumers or generators.

3. The computer-implemented method according to any one of the previous claims, wherein the apportioning of the electric power comprises limiting the maximum consumable electric power for at least one individual consumer and/or generator.

4. The computer-implemented method according to any one of the previous claims, the method further comprising compiling a consumer and/or generator profile using the at least one parameter, wherein the profile comprises the consumers and/or generators requested or expected load capacity over a predetermined range of time, and wherein in the step of determining the developing plan, the developing plan further comprises comprises matching the consumer and/or generator profile to the first estimation, and apportioning the electric power such that the grid state corresponds with the consumer and/or generator profile.

5. The computer-implemented method of claim 4, mapping the consumer and/or generator profile to one or more topology point in the grid.

6. The computer-implemented method of claim 5, wherein in the step of determining the developing plan, the developing plan further comprises determining where new consumers and/or generators are integrateable in the grid based on the mapping and the first estimation.

7. The computer-implemented method according to any one of the previous claims 4-6, wherein consumer and/or generator profile further comprises at least one growth parameter representative for an expected load growth of the consumer and/or generator.

8. The computer-implemented method according to any one of the previous claims, wherein the at least one grid measurement comprises at least a parameter time curve representative for the consumption of electric power by an individual consumers.

9. The computer-implemented method according to any one of the previous claims, wherein the step of inputting at least one measurement, comprises measuring at least a portion of the load at a single connection point in the power grid.

10. The computer-implemented method according to any one of the previous claims, wherein determining one or more new recovery routes comprises generating instructions for at least one of: adding a new transformer or generator and connecting a substation to a different transmission line.

11. The computer-implemented method according to any one of the previous claims, wherein identifying the one or more power components comprises:
comparing a predicted performance parameter of a power component from the first estimation with a required performance threshold derived from the expected second base load; and
identifying the component as not meeting the load if the predicted performance parameter fails to meet the required performance threshold, such as in a predicted overload condition.

12. The computer-implemented method according to any one of the previous claims, wherein the step of identifying one or more power components is performed for the purpose of generating instructions for the developing plan, wherein the instructions comprise at least one of:
increasing a capacity of the identified power component, for example by adding a new transformer or generator; and
rerouting one or more power transmission lines to bypass the identified power component.

13. A computer program comprising a computer-executable program of instructions for performing, when executed on a computer, the steps of the method of any one of the previous claims.
